(19) Europäisches Patentamt
European Patent Office
Office européen des brevets

(11) **EP 3 746 578 B1**

(12) **EUROPÄISCHE PATENTSCHRIFT**

(45) Veröffentlichungstag und Bekanntmachung des Hinweises auf die Patenterteilung:
**29.07.2026 Patentblatt 2026/31**

(21) Anmeldenummer: **19705290.5**

(22) Anmeldetag: **29.01.2019**

(51) Internationale Patentklassifikation (IPC):
**C23C 8/20** (2006.01)    **C23C 8/30** (2006.01)
**F27D 5/00** (2006.01)

(52) Gemeinsame Patentklassifikation (CPC):
**C23C 8/20; C21D 1/74; C21D 11/00; C23C 8/30; F27D 5/0006**

(86) Internationale Anmeldenummer:
**PCT/EP2019/052059**

(87) Internationale Veröffentlichungsnummer:
**WO 2019/149676 (08.08.2019 Gazette 2019/32)**

(54) **VORRICHTUNG ZUR ABSTÜTZUNG UND STRÖMUNGSFÜHRUNG FÜR METALLISCHE WERKSTÜCKE UND VERFAHREN ZUR THERMOCHEMISCHEN BEHANDLUNG**

DEVICE FOR SUPPORTING METALLIC WORKPIECES AND GUIDE THE GAS FLOW AND METHOD FOR THERMOCHEMICAL TREATMENT

DISPOSITIF POUR SUPPORTER DES PIÈCES MÉTALLIQUES ET GUIDER LE FLUX DE GAZ ET PROCÉDÉ DE TRAITEMENT THERMOCHIMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2018 DE 102018101994**

(43) Veröffentlichungstag der Anmeldung:
**09.12.2020 Patentblatt 2020/50**

(73) Patentinhaber: **ALD Vacuum Technologies GmbH 63457 Hanau (DE)**

(72) Erfinder: **HEUER, Volker
60596 Frankfurt a.M. (DE)**

(74) Vertreter: **Fuchs Patentanwälte Partnerschaft mbB
Tower 185
Friedrich-Ebert-Anlage 35-37
60327 Frankfurt am Main (DE)**

(56) Entgegenhaltungen:
**EP-A1- 3 144 622        EP-A1- 3 379 189
WO-A1-2016/009849        CN-U- 201 581 117
DE-B3- 10 312 802**

**Beschreibung**

Die vorliegende Erfindung betrifft eine Vorrichtung zur Abstützung von metallischen Werkstücken bei der thermochemischen Behandlung und ein Verfahren zur thermochemischen Behandlung von ein, zwei oder mehreren metallischen Werkstücken.

Im Stand der Technik ist es üblich, metallische Werkstücke, wie beispielsweise Zahnräder thermochemisch zu behandeln. Eines der am häufigsten angewendeten Verfahren ist das Einsatzhärten (https://de.wikipedia.org/wiki/Einsatzhärten), bei dem Werkstücke aus Stahl oder anderen Legierungen aufgekohlt, diffundiert und abgeschreckt werden, um an der Oberfläche der Werkstücke eine Schicht mit einem bestimmten, vorzugsweise martensitischen Gefüge zu erzeugen. Weitere thermochemische Verfahren sind das Carbonitrieren, bei dem Kohlenstoff und Stickstoff in die Werkstücke eingebracht werden, und das Nitrieren, bei dem nur Stickstoff eingebracht wird. EP 3 144 622 A1, EP 3 379 189 A1, WO 2016/009849 A1, DE 103 12 802 B3 und CN 20158117U befassen sich mit Werkstückträgern für Bauteile zur thermischen Behandlung.

Bei der thermochemischen Behandlung mittels Aufkohlen und Carbonitrieren werden die Werkstücke über einen Zeitraum von 30 min bis zu einigen Stunden auf Temperaturen im Bereich von 800 bis 1100 °C gehalten.

Überwiegend werden bei der thermochemischen Behandlung Chargen mit einer Stückzahl bzw. Losgröße von einigen Zehn bis zu einigen Hundert Werkstücken in speziell konzipierten Anlagen mit einer oder mehreren Schleusen-, Ofen- und Abschreckkammern behandelt. In Ausnahmefällen, wie beispielsweise Getriebezahnrädern mit einem Durchmesser von mehr als 600 mm oder Maschinenteilen mit hohen Präzisionsanforderungen werden die Werkstücke seriell behandelt (one piece flow) wobei in einer Behandlungskammer jeweils ein einzelnes Werkstück einem der thermochemischen Verfahrensschritte unterzogen wird. Kleine Bauteile mit unkritischer Fertigungstoleranz, werden häufig in Form von schüttgutartigen Chargen mit einer Stückzahl von einigen Hundert bis zu einigen Tausend Werkstücken behandelt. Demgegenüber werden größere und höherwertige Bauteile in geordneter Weise auf Chargenträger angeordnet, um kontrollierte und möglichst homogene Verfahrensbedingungen zu gewährleisten. Insbesondere wird eine homogene Temperaturverteilung und Beaufschlagung der Werkstücke mit kohlenstoff- und stickstoffhaltigen Prozessgasen sowie eine gleichmäßige Umströmung der Werkstückoberfläche mit Abschreckfluid angestrebt.

Die Chargenträger sind in der Regel als gitterförmige Roste ausgebildet und bestehen aus einem hochtemperaturbeständigen Material, wie Grafit, kohlenstofffaserverstärktem Kohlenstoff (CFRC) oder hochnickelhaltigem Stahl. Die Herstellung der Chargenträger ist aufwendig und kostenintensiv. Um die thermochemische Behandlung wirtschaftlich durchzuführen, werden die Chargenträger möglichst lange, d.h. für die Behandlung zahlreicher Werkstückchargen eingesetzt und sind hoher mechanischer und thermischer Belastung ausgesetzt. Beim Be- und Entladen der Chargenträger mit Werkstücken kommt es zu mechanischem Abrieb. Zudem bewirken die zahlreichen Heiz- und Abschreckvorgänge kumulativen thermischen Verzug. Die fortschreitende mechanische und thermische Belastung führt dazu, dass die Oberfläche der Chargenträger bereits nach wenigen Produktionsläufen geringfügige Unebenheiten und Verwerfungen aufweist.

Werkstücke aus Stahl sind - je nach Stahlsorte - ab einer Temperatur im Bereich von 500 bis 800 °C schmiedbar, d.h. unter Krafteinwirkung plastisch verformbar. Im Rahmen der vorliegenden Erfindung wird diese Temperatur in Anlehnung an Kunststoffe als "Erweichungstemperatur" bzw. als "Erweichungspunkt" bezeichnet.

Beim Aufkohlen und Carbonitrieren werden die Werkstücke regelmäßig über einen beträchtlichen Zeitraum auf einer Temperatur oberhalb ihres "Erweichungspunktes" gehalten.

Ein auf einem Chargenträger gelagertes und über seinen "Erweichungspunkt" aufgeheiztes Werkstück, schmiegt sich unter der Einwirkung seines Eigengewichts an die Oberfläche des Chargenträgers an. Wenn die Oberfläche des Chargenträgers hinreichend eben ist, so dass die lokale Krümmung sehr klein bzw. der lokale Krümmungsradius sehr groß ist im Vergleich zu den Abmessungen der Werkstücke, ist der Wärmebehandlungsverzug der Werkstücke geringfügig und liegt innerhalb vorgegebener Toleranzen. Weist die Oberfläche des Chargenträgers jedoch eine oder mehrere Unebenheiten auf mit erheblicher Krümmung bzw. einem Krümmungsradius unterhalb eines kritischen Grenzwertes, kann der Wärmebehandlungsverzug der Werkstücke die Toleranzen überschreiten und eine beträchtlich erhöhte Ausschussrate verursachen.

Im Weiteren kann eine ungleichmäßige Überströmung der Werkstücke mit Kühlfluid beim Abschrecken ebenfalls einen Verzug der Werkstücke verursachen

Die vorliegende Erfindung hat die Aufgabe, eine Vorrichtung für die Verringerung der Maß- und Formänderungen bzw. des Verzuges metallischer Werkstücke bei der thermochemischen Behandlung bereit zu stellen.

Diese Aufgabe wird gelöst durch eine Vorrichtung zur Abstützung und Strömungsführung für metallische Werkstücken bei der thermochemischen Behandlung, umfassend einen Ring mit einer ersten und zweiten Stirnseite, wobei die zweite Stirnseite mit drei oder mehr Stützelementen ausgerüstet ist, die Stützelemente eine Stützebene begrenzen, der Ring einen Querschnitt mit kreisförmiger Außenkontur hat, oder der Ring einen Querschnitt mit kreisförmiger Innenkontur und gleichzeitig hexagonaler Außenkontur hat, und der Ring und die Stützelemente einstückig ausgebildet sind, und der Ring eine Querschnittsfläche hat, jedes Stützelement eine Stützfläche aufweist und die Summe der Stützflächen aller Stützelemente 10 bis 50 % der Querschnittsfläche beträgt.

Eine weitere Aufgabe der Erfindung besteht darin, ein Verfahren für die thermochemische Behandlung metallischer Werkstücke mit einer im Vergleich zu bekannten Verfahren verringerten Maß- und Formänderung bzw. einem verringerten Verzug bereit zu stellen. Diese Aufgabe wird gelöst durch ein Verfahren zur thermochemischen Behandlung ein, zwei oder mehrerer metallischer Werkstücke nach Anspruch 6, wobei an einer ersten und/oder zweiten Seite jedes Werkstücks eine Vorrichtung, wie vorstehend beschrieben, angeordnet ist.

Die Erfindung ermöglicht es, bei der thermochemischen Behandlung jedes Werkstück planar bzw. eben zu lagern und Maß- und Formänderungen bzw. Verzug maßgeblich zu verringern. Die erfindungsgemäße Vorrichtung ist einfach gestaltet und mit geringem Aufwand herstellbar. Zudem ist die Vorrichtung hochtemperaturbeständig, mechanisch robust und für eine lange Gebrauchsdauer ausgelegt. In bevorzugten Ausführungsformen der Erfindung ist die, auf die Stützfläche bezogene Berührungsfläche zwischen dem Werkstück und der Vorrichtung gering, so dass eine intensive und weitgehend konforme Überströmung der Werkstückoberfläche mit einem Abschreckfluid, wie beispielsweise Stickstoff oder Öl gewährleistet ist. Zudem ist die Vorrichtung vorzugsweise derart gestaltet, dass die abgestützte Werkstückoberfläche praktisch vollständig aufgekohlt wird. Somit wird bei der Niederdruck-Aufkohlung für den Kohlenstoff ein "Abschirmungseffekt", auch als "Masking" bezeichnet, sicher vermieden.

Überraschend wurde gefunden, dass der Verzug der Werkstücke in besonderem Maß verringert werden kann, wenn bei der thermochemischen Behandlung jedes Werkstück zwischen zwei erfindungsgemäßen Vorrichtungen gelagert bzw. angeordnet ist (nachfolgend auch als "Sandwich-Anordnung" oder "Sandwich-Verfahren" bezeichnet). Die Ursache für diesen vorteilhaften Effekt konnte bisher nicht aufgeklärt werden. Der Erfinder vermutet, dass durch die Sandwich-Anordnung die Umströmung der Werkstückoberfläche mit dem bei der Abschreckung verwendeten Kühlfluid homogenisiert wird. Demzufolge bewirkt die Sandwich-Anordnung bei der Abschreckung eine räumlich gleichmäßigere Abkühlung des Werkstücks und damit verbunden eine Minderung des thermischen Verzugs.

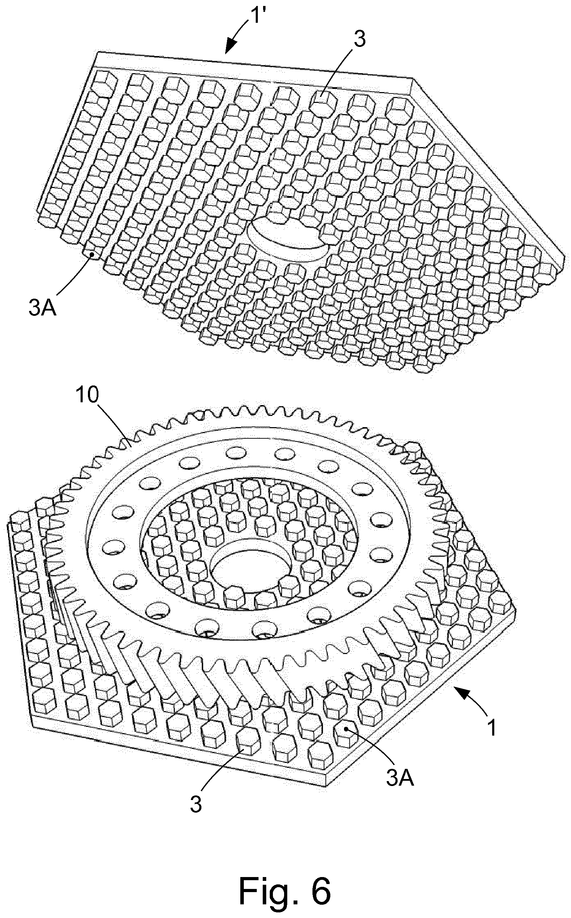

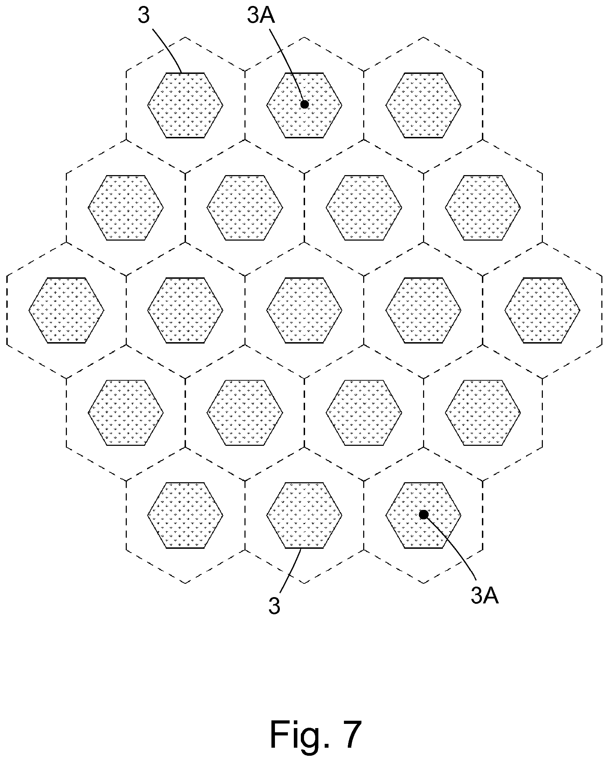

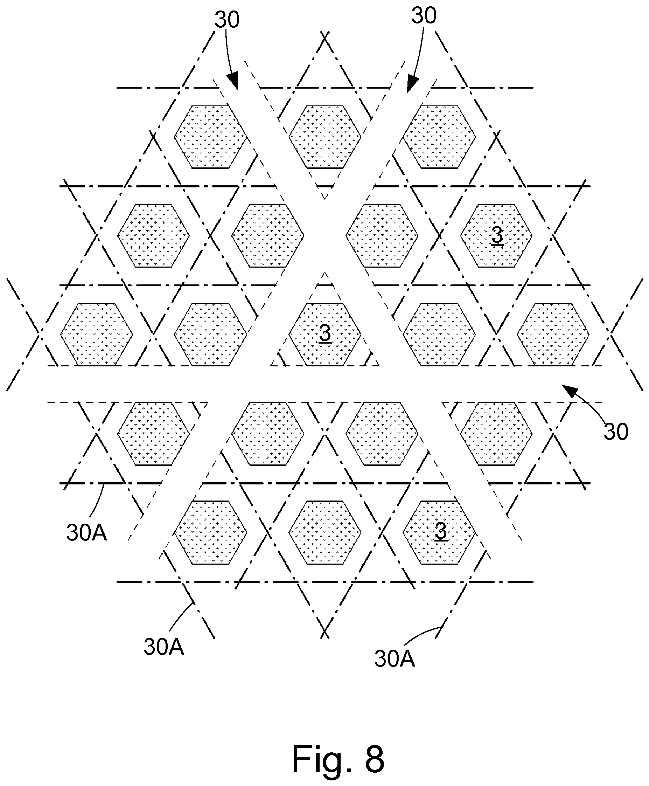

In der vorliegenden Erfindung bezeichnet der Begriff "Hüllkreis" den minimalen umschreibenden Kreis (MCCI bzw. Minimum Circumscribed Circle) eines Querschnitts eines Rings einer erfindungsgemäßen Vorrichtung oder eines Querschnitts eines Werkstücks, wie beispielsweise eines Zahnrads. Der Hüllkreis wird gemäß DIN EN ISO 12180-1:2011-07 und DIN EN ISO 12181-2:2011-07 mithilfe einer Zahnradinspektionsanlage oder eines Koordinatenmesssystems bestimmt. Bei einem gleichseitigen Polygon entspricht der Fig. 7 zeigt eine schematische Draufsicht gleichseitig hexagonal ausgebildeter Stützelemente 3 mit Stützflächen 3A einer erfindungsgemäßen Vorrichtung (1, 1') der in Fig. 6 gezeigten Art. Die Stützelemente 3 sind in einem zweidimensional periodischen Muster mit hexagonaler Symmetrie angeordnet. Die Anordnung der Stützelemente 3 in einem zweidimensional periodischen Muster ermöglicht eine flächig gleichmäßige Abstützung von Werkstücken sowie eine annähernd gleichförmige Überströmung der Werkstücke mit Prozessgas und Kühlfluid bei der Abschreckung. Die Wiederholeinheiten (bzw. Voronoi-Zonen) des hexagonalen periodischen Musters sind in Fig. 7 mit strichlierten Linien dargestellt. Jede der hexagonalen Stützflächen 3A ist relativ zu der Wiederholeinheit des hexagonal periodischen Musters um 30 Grad gedreht. Diese Konfiguration ermöglicht eine einfache und kostengünstige Herstellung der erfindungsgemäßen Vorrichtung aus massiven Platten mittels spanender Bearbeitung. Insbesondere kann die Vorrichtung mittels Fräsen aus einer massiven Platte aus Grafit oder kohlenstofffaserverstärktem Kohlenstoff (CFRC) hergestellt werden (siehe Fig. 8).

Fig. 8 zeigt eine zu Fig. 7 analoge Draufsicht hexagonal ausgebildeter Stützelemente 3, die in einem zweidimensional periodischen Muster mit hexagonaler Symmetrie angeordnet sind. Die Stützelemente 3 sind durch Ausnehmungen 30 bzw. Nuten 30 voneinander getrennt. Jede der Ausnehmungen 30 verläuft entlang einer Mittenachse 30A. Jede der Mittenachsen 30A gehört zu einer von drei Scharen äquidistanter paralleler Geraden, wobei die Geraden zweier voneinander verschiedener Scharen um einen Winkel von 120 oder 240 Grad gegeneinander gedreht sind.

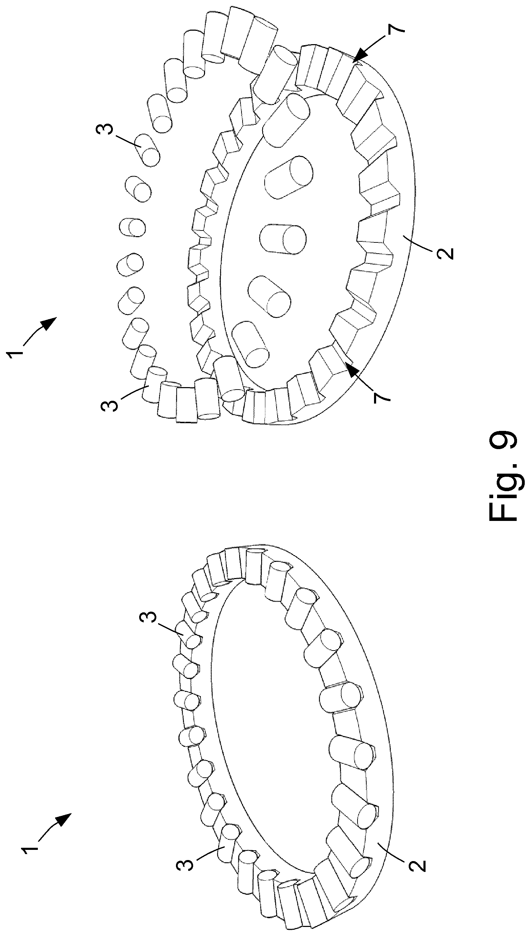

Fig. 9 zeigt schematische Perspektivansichten einer erfindungsgemäßen Vorrichtung 1 in einfacher Darstellung und nach Art einer Explosionszeichnung. Die Vorrichtung 1 umfasst einen Ring 2 mit Aufnahmen bzw. Lagern 7 für zylinderförmige Stützelemente 3. Die Aufnahmen bzw. Lager 7 sind als radial orientierte Nuten mit trapezförmigem Querschnitt ausgebildet. In einer alternativen, in Fig. 9 nicht gezeigten Ausführungsform der Vorrichtung 1 ist eine Längsachse der Aufnahmen bzw. Lager 7 in einer zu der AußenflächeAußenfläche des Rings 2 parallelen Ebene gegenüber der jeweils radialen Richtung um einen Winkel von bis zu 45 Grad gedreht. Vorzugsweise sind die zylinderförmigen Stützelemente 3 aus einem hochtemperaturbeständigen Material, wie Grafit, kohlenstofffaserverstärktem Kohlenstoff (CFRC), oxidkeramischem Faserverbundwerkstoff (OCMC) oder einem anderen keramischen Werkstoff gefertigt.

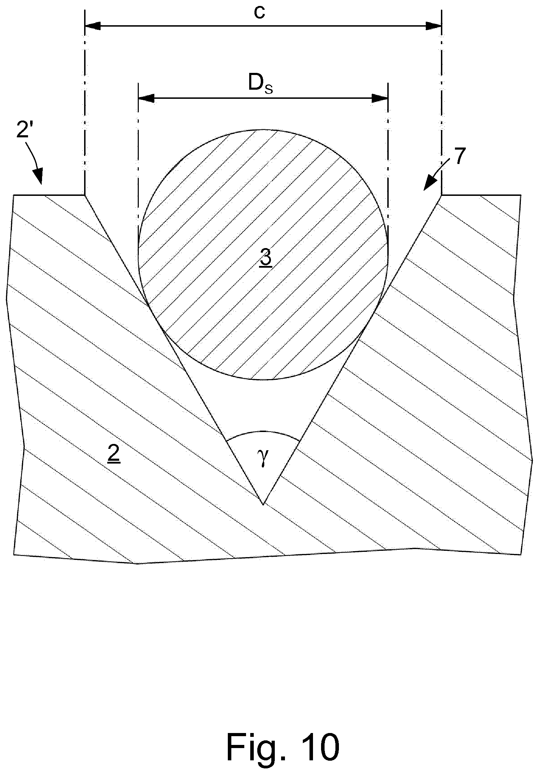

Fig. 10 zeigt eine Schnittansicht einer erfindungsgemäßen Vorrichtung mit einem Ring 2 mit einer Aufnahme 7 für ein zylinderförmiges Stützelement 3 mit Außendurchmesser $D_S$. Die Aufnahme 7 ist als Nut mit einem Querschnitt in Gestalt eines gleichseitigen Dreiecks ausgebildet. Eine Grundseite des gleichseitigen Dreiecks hat eine Länge c und ein der Grundseite gegenüberliegender Spitzenwinkel $\gamma$ liegt im Bereich von 60° bis 120° ($60° \leq \gamma \leq 120°$). Die Aufnahme 7 ist derart gestaltet, dass ein in der Aufnahme 7 gelagertes Stützelement 3 über eine Stirnfläche 2' des Rings 2 hinausragt. Dementsprechend genügt die Länge c der Relation $D_s \cdot \cos(\gamma/2) < c < D_s \cdot \cot(45° - \gamma/4)$.

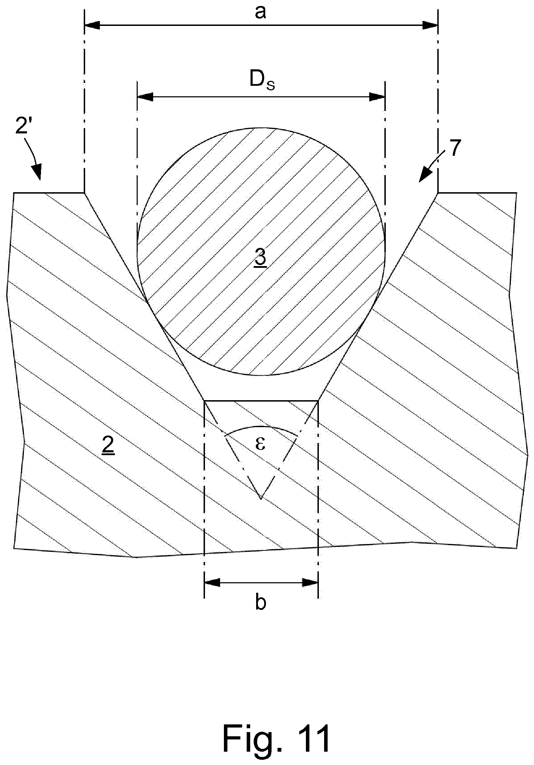

Fig. 11 zeigt eine Schnittansicht einer weiteren erfindungsgemäßen Vorrichtung mit einem Ring 2 mit einer Aufnahme 7 für ein zylinderförmiges Stützelement 3 mit Außendurchmesser $D_S$. Die Aufnahme 7 ist als Nut mit einem Querschnitt in Gestalt eines symmetrischen Trapez ausgebildet. Eine lange und kurze Grundseite des symmetrischen Trapez haben eine Länge a und respektive b. Ein von den Trapezschenkeln eingeschlossener Winkel $\varepsilon$ liegt im Bereich von 60° bis 120° ($60° \leq \varepsilon \leq 120°$). Die Aufnahme 7 ist derart gestaltet, dass ein in der Aufnahme 7 gelagertes Stützelement 3 über eine Stirnfläche 2' des Rings 2 hinausragt. Dementsprechend genügen die Längen a und b den Relationen

$$D_s \cdot \cos(\varepsilon/2) < a < D_s \cdot \cot(45° - \varepsilon/4)$$

und respektive

$$0 < b < D_s \cdot \cot(45° + \varepsilon/4) \ .$$

Die in der vorstehenden Beschreibung durch Ausführungsbeispiele näher illustrierte und erläuterte Erfindung ist durch die offenbarten Beispiele nicht eingeschränkt. Der Fachmann kann aus der Beschreibung eine Vielzahl zusätzlicher Variationen ableiten, ohne den Schutzumfang der Erfindung zu verlassen. Die Erfindung und der entsprechende Schutzbereich werden durch die Ansprüche definiert.

**Beispiel 1**

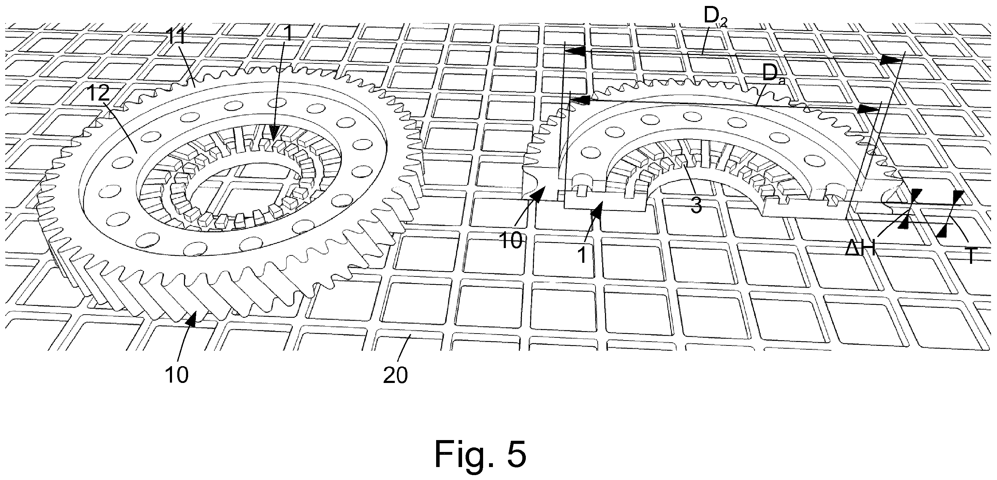

Es wurden 72 unbehandelte Getriebezahnräder aus Stahl mit einer Gestalt der in Fig. 5 gezeigten Art mit einem Zahnkranz mit 378 mm Kopfkreisdurchmesser, einem Flansch und einer Innenbohrung bereitgestellt. An jedem der Getriebezahnräder wurde gemäß DIN EN ISO 12181-1:2011-07 und DIN EN ISO 12181-2:2011-07 der Rundlauf (d.h. die kreisförmige radiale Lauftoleranz) am Kopfkreisdurchmesser (bzw. den äußeren Zahnflanken) und der Planlauf (d.h. die kreisförmige axiale Lauftoleranz) auf einer Stirnfläche des Zahnkranzes gemessen. Die Messungen wurden auf einer Zahnradinspektionsanlage des Typs 300 GMS P von Gleason durchgeführt.

Nach der Messung wurden die Getriebezahnräder in einer Anlage des Typs ModulTherm® der Firma ALD bei 950 °C unter Niederdruck bei etwa 15 mbar aufgekohlt und anschließend mittels komprimiertem Stickstoff abgeschreckt. Die Dauer der thermochemischen Behandlung mit den Verfahrensschritten Aufheizen, Aufkohlen, Diffusion und Abschrecken betrug 2 Stunden. 36 der 72 Getriebezahnräder waren über die gesamte Verfahrensdauer auf erfindungsgemäßen Vorrichtungen gelagert. Wie in Fig. 5 dargestellt, wurde der Flansch jedes der 36 Getriebezahnräder mittels eines mit kreisförmigen und radialen Stützstegen ausgerüsteten Grafitringes abgestützt, wobei der gesamte Zahnkranz in radialer Richtung frei schwebend über den Grafitring hinausragte.

Die übrigen 36 Getriebezahnräder wurden in herkömmlicher Weise direkt auf einem gitterförmigen Träger aus kohlenstofffaserverstärktem Kohlenstoff (CFRC) abgelegt.

Nach der thermochemischen Behandlung wurde der Rund- und Planlauf jedes der 72 Getriebezahnräder erneut gemessen. Die Mittelwerte der Messergebnisse nach der thermochemischen Behandlung sind in Tabelle 1 wiedergegeben.

Tabelle 1

| Mittelwert nach thermochemischer Behandlung | | |
|---|---|---|
| | **Rundlauf** | **Planlauf** |
| **ohne Abstützung (36 Teile)** | 62 μm | 71 μm |
| **mit Abstützung (36 Teile)** | 46 μm | 40 μm |

Aus Tabelle 1 ist ersichtlich, dass mit der erfindungsgemäßen Abstützung der radiale und axiale Verzug der 36 erfindungsgemäß abgestützten Getriebezahnräder und die damit verbundene Zunahme der Rundlauf- und Planlaufschwankung durch die thermochemische Behandlung um 26 % und respektive 44 % niedriger ist im Vergleich zu den 36 direkt auf dem Träger abgelegten Getriebezahnrädern.

**Beispiel 2**

Es wurden 214 unbehandelte Getriebezahnräder aus Stahl mit einer Gestalt der in Fig. 5 gezeigten Art mit einem Zahnkranz mit 378 mm Kopfkreisdurchmesser, einem Flansch und einer Innenbohrung bereitgestellt. An jedem der Getriebezahnräder wurde gemäß DIN EN ISO 12181-1:2011-07 und DIN EN ISO 12181-2:2011-07 der Rundlauf (d.h. die kreisförmige radiale Lauftoleranz) am Kopfkreisdurchmesser (bzw. den äußeren Zahnflanken) und der Planlauf (d.h. die kreisförmige axiale Lauftoleranz) auf einer Stirnfläche des Zahnkranzes gemessen. Die Messungen wurden auf einer Zahnradinspektionsanlage des Typs 300 GMS P von Gleason durchgeführt.

Nach der Messung wurden die Getriebezahnräder auf zwei Produktionschargen mit 108 und 106 Getriebezahnrädern aufgeteilt und jeweils in einer Anlage des Typs ModulTherm® der Firma ALD bei 950 °C unter Niederdruck bei etwa 15 mbar aufgekohlt und anschließend mittels komprimiertem Stickstoff abgeschreckt. Die Dauer der thermochemischen Behandlung mit den Verfahrensschritten Aufheizen, Aufkohlen, Diffusion und Abschrecken betrug 2 Stunden.

In Tabelle 2 ist die Aufteilung der Getriebezahnräder auf die erste und zweite Produktionscharge sowie die Konfiguration bzw. Verwendung der erfindungsgemäßen Vorrichtung zur Abstützung und/oder Abschirmung der Getriebezahnräder wiedergegeben.

Tabelle 2

| Vorrichtung | Produktionscharge 1 | Produktionscharge 2 |
|---|---|---|
| ohne | 54 Stk | 54 Stk |
| unten | 10 Stk | 10 Stk |
| oben | 18 Stk | 18 Stk |
| oben & unten (Sandwich) | 25 Stk | 25 Stk |

108 Getriebezahnräder wurden in herkömmlicher Weise direkt auf einem gitterförmigen Träger aus kohlenstofffaserverstärktem Kohlenstoff (CFRC) abgelegt.

Bei 20 Getriebezahnräder wurde, wie in in Fig. 5 dargestellt, der Flansch durch einen Grafitring mit kreisförmigen und radialen Stützstegen abgestützt, wobei der gesamte Zahnkranz in radialer Richtung frei schwebend über den Grafitring hinausragte.

36 Getriebezahnräder wurden direkt auf einem gitterförmigen Träger abgelegt und auf der Oberseite jedes Getriebezahnrads ein Grafitring derart angeordnet, dass die Stützstege des Grafitrings nach unten, d.h. dem Getriebezahnrad zugewandt sind.

Bei 50 Getriebezahnrädern wurden jeweils zwei Grafitringe in Sandwich-Anordnung eingesetzt, wobei die Unterseite des Flansches eines Getriebezahnrads auf einem ersten Grafitring aufliegt und auf der Oberseite des Flansches ein zweiter Grafitring angeordnet ist.

Nach der thermochemischen Behandlung wurde an jedem der 214 Getriebezahnräder der Rund- und Planlauf erneut gemessen und von dem erhaltenen Messergebnis der jeweilige Ausgangswert subtrahiert. Die durch die thermochemische Behandlung verursachte Zunahme des Rund- und Planlaufs ist in Tabelle 3 wiedergegeben.

Tabelle 3

| Vorrichtung | Zunahme | Rundlauf | Planlauf |
|---|---|---|---|
| ohne | Mittelwert | 42 µm | 55 µm |
| | Maximum | 194 µm | 125 µm |
| unten | Mittelwert | 43 µm | 30 µm |
| | Maximum | 75 µm | 51 µm |
| oben | Mittelwert | 27 µm | 46 µm |
| | Maximum | 91 µm | 108 µm |
| oben & unten (Sandwich) | Mittelwert | 32 µm | 28 µm |
| | Maximum | 80 µm | 85 µm |

**Bezugszeichenliste**

| 1, 1' | Vorrichtung zur Abstützung oder Abschirmung |
|---|---|
| 2 | Scheibe oder Ring |
| 2' | Stirnfläche der Scheibe oder des Rings 2 |
| 2A | erste Stirnseite / Außenfläche der Vorrichtung 1, 1' |

| 2B | zweite Stirnseite der Vorrichtung 1, 1' |
|---|---|
| 3 | Stützelement |
| 3A | Stützfläche eines Stützelements 3 |
| 4 | Stützebene |
| 5 | kreisförmige Ausnehmung / Nut |
| 6 | radiale Ausnehmung / Nut |
| 7 | Aufnahme für Stützelement 3 |
| 10 | Zahnrad |
| 11 | Zahnkranz |
| 12 | Flansch |
| 20 | Träger |
| 30 | Ausnehmung / Nut 30A Nutachse / Schneidachse / Fräsachse |
| T | Abstand zwischen erster Stirnseite 2A und Stützebene 4 |
| $D_i$ | innerer Durchmesser des Rings 2 |
| $D_a$ | Durchmesser des Hüllkreises der Scheibe oder des Rings 2 |
| $D_2$ | Außendurchmesser des Flansches 12 |
| $\Delta H$ | Höhenunterschied zwischen Zahnkranz 11 und Flansch 12 |
| $D_S$ | Durchmesser zylinderförmiger Stützelemente 3 |
| c | Grundseite eines dreieckförmigen Querschnitts einer Aufnahme 7 |
| $\gamma$ | Spitzenwinkel eines dreieckförmigen Querschnitts einer Aufnahme 7 |
| a | lange Grundseite eines trapezförmigen Querschnitts einer Aufnahme 7 |
| b | kurze Grundseite eines trapezförmigen Querschnitts einer Aufnahme 7 |
| $\epsilon$ | Spitzenwinkel eines trapezförmigen Querschnitts einer Aufnahme 7 |

**Patentansprüche**

1. Vorrichtung (1, 1') zur Abstützung und Strömungsführung für metallische Werkstücke (10) bei der thermochemischen Behandlung, umfassend einen Ring (2) mit einer ersten und zweiten Stirnseite (2A, 2B), wobei die zweite Stirnseite (2B) mit drei oder mehr Stützelementen (3) ausgerüstet ist, die Stützelemente (3) eine Stützebene (4) begrenzen, wobei

   der Ring (2) einen Querschnitt mit kreisförmiger Außenkontur hat, oder
   der Ring (2) einen Querschnitt mit kreisförmiger Innenkontur und gleichzeitig hexagonaler Außenkontur hat,
   der Ring (2) und die Stützelemente (3) einstückig ausgebildet sind, und
   der Ring (2) eine Querschnittsfläche Q hat, jedes Stützelement (3) eine Stützfläche (3A) aufweist und die Summe der Stützflächen (3A) aller Stützelemente (3) 10 bis 50 % der Querschnittsfläche Q beträgt.

2. Vorrichtung (1, 1') nach Anspruch 1, **dadurch gekennzeichnet, dass** sie N Stützelemente umfasst mit $10 \leq N \leq 200$.

3. Vorrichtung (1, 1') nach Anspruch 1 oder 2, **dadurch gekennzeichnet, dass** die die Stützelemente (3) als Stege ausgebildet sind.

4. Vorrichtung (1, 1') nach einem oder mehreren der Ansprüche 1 bis 3, **dadurch gekennzeichnet, dass** der Ring (2) aus Grafit oder kohlenstofffaserverstärktem Kohlenstoff (CFRC) gefertigt ist.

5. Vorrichtung (1, 1') nach einem oder mehreren der Ansprüche 1 bis 4, **dadurch gekennzeichnet, dass** eine Oberfläche der Stützelemente (3) mit Partikeln aus einem keramischen Werkstoff ausgerüstet ist und die Partikel einen äquivalenten Durchmesser im Bereich von 5 bis 1000 nm haben.

6. Verfahren zur thermochemischen Behandlung ein, zwei oder mehrerer metallischer Werkstücke (10), **dadurch gekennzeichnet, dass** an einer ersten und/oder zweiten Seite jedes Werkstücks (10) eine Vorrichtung (1, 1') nach einem oder mehreren der Ansprüche 1 bis 5 angeordnet ist, die Werkstücke (10) einen Querschnitt mit einem Hüllkreis mit Durchmesser $D_k$ aufweisen, die Vorrichtung (1, 1') einen Ring (2) umfasst und der Ring (2) einen Querschnitt mit einem Hüllkreis mit Durchmesser $D_a$ hat und $0,5 \cdot D_k \leq D_a \leq 1,2 \cdot D_k$ ist, wobei der Hüllkreis den minimalen umschreibenden Kreis eines Querschnitts des Rings (2) oder eines Querschnitts eines Werkstücks (10) entspricht, wobei der Hüllkreis gemäß DIN EN ISO 12180-1:2011-07 und DIN EN ISO 12181-2:2011-07 mithilfe einer Zahnradinspektionsanlage oder eines Koordinatenmesssystems bestimmt wird.

7. Verfahren nach Anspruch 6, **dadurch gekennzeichnet, dass** ein, zwei oder mehr Werkstücke (10) in einer Ofenkammer zusammen aufgekohlt werden und in einer vertikalen Richtung zwischen einer oberen und unteren Wand der Heizkammer jeweils ein Werkstück (10) angeordnet ist.

8. Verfahren nach Anspruch 6 oder 7, **dadurch gekennzeichnet, dass** ein, zwei oder mehr Werkstücke (10) in einer Ofenkammer zusammen carbonitriert werden und in einer vertikalen Richtung zwischen einer oberen und unteren Wand der Heizkammer jeweils ein Werkstück (10) angeordnet ist.

9. Verfahren nach einem oder mehr der Ansprüche 6 bis 8, **dadurch gekennzeichnet, dass** ein, zwei oder mehr Werkstücke (10) in einer Abschreckkammer zusammen abgeschreckt werden und in einer vertikaler Richtung zwischen einer oberen und unteren Wand der Abschreckkammer jeweils ein Werkstück (10) angeordnet ist.

**Claims**

1. A device (1, 1') for support and flow guidance for metal workpieces (10) during thermochemical treatment, comprising a ring (2) having a first and second end face (2A, 2B), wherein the second end face (2B) is equipped with three or more support elements (3), which support elements (3) delimit a support plane (4), wherein

   the ring (2) has a cross section having a circular outer contour, or
   the ring (2) has a cross section having a circular inner contour and a hexagonal outer contour at the same time,
   the ring (2) and the support elements (3) are formed in one piece, and
   the ring (2) has a cross-sectional area Q, each support element (3) comprises a support area (3A), and the total of the support areas (3A) of all the support elements (3) is 10% to 50% of the cross-sectional area Q.

2. The device (1, 1') according to claim 1, **characterized in that** it comprises N support elements, where $10 \leq N \leq 200$.

3. The device (1, 1') according to claim 1 or 2, **characterized in that** the support elements (3) are configured as ridges.

4. The device (1, 1') according to one or more of claims 1 to 3, **characterized in that** the ring (2) is made of graphite or carbon fiber-reinforced carbon (CFRC).

5. The device (1, 1') according to one or more of claims 1 to 4, **characterized in that** a surface of the support elements (3) is equipped with particles made of a ceramic material and the particles have an equivalent diameter in the range from 5 to 1000 nm.

6. A method for the thermochemical treatment of one, two, or more metal workpieces (10), **characterized in that** a device (1, 1') according to one or more of claims 1 to 5 is arranged on a first and/or second side of each workpiece (10), the workpieces (10) have a cross section having an envelope circle having a diameter $D_k$, the device (1, 1') comprises a ring (2) and the ring (2) has a cross section having an envelope circle having a diameter $D_a$ and is $0.5 \cdot D_k \leq D_a \leq 1.2 \cdot D_k$, wherein the envelope circle corresponds to the minimum circumscribed circle of a cross section of the ring (2) or of a cross section of a workpiece (10), wherein the envelope circle is determined by means of a gearwheel inspection system or a coordinate measurement system in accordance with DIN EN ISO 12180-1:2011-07 and DIN EN ISO 12181-2:2011-07.

7. The method according to claim 6, **characterized in that** one, two, or more workpieces (10) are carburized together in a furnace chamber and one workpiece (10) in each case is arranged between an upper and lower wall of the heating chamber in a vertical direction.

8. The method according to claim 6 or 7, **characterized in that** one, two, or more workpieces (10) are carbonitrided together in a furnace chamber and one workpiece (10) in each case is arranged between an upper and lower wall of the heating chamber in a vertical direction.

9. The method according to one or more of claims 6 to 8, **characterized in that** one, two, or more workpieces (10) are quenched together in a quenching chamber and one workpiece (10) in each case is arranged between an upper and lower wall of the quenching chamber in a vertical direction.

**Revendications**

1. Dispositif (1, 1') destiné au support et au guidage de l'écoulement de pièces métalliques (10) lors d'un traitement thermochimique, comprenant un anneau (2) avec une première et une seconde faces avant (2A, 2B), dans lequel la seconde face avant (2B) est équipée de trois éléments de support (3) ou plus, les éléments de support (3) délimitant un plan de support (4), dans lequel

   l'anneau (2) présente une section transversale avec un contour extérieur circulaire, ou
   l'anneau (2) présente une section transversale avec un contour intérieur circulaire et simultanément un contour extérieur hexagonal,
   l'anneau (2) et les éléments de support (3) sont formés d'un seul tenant, et
   l'anneau (2) présente une surface de section transversale Q, chaque élément de support (3) présente une surface de support (3A) et la somme des surfaces de support (3A) de tous les éléments de support (3) représente entre 10 et 50 % de la surface de section transversale Q.

2. Dispositif (1, 1') selon la revendication 1, **caractérisé en ce qu'il** comprend N éléments de support avec $10 \leq N \leq 200$.

3. Dispositif (1, 1') selon la revendication 1 ou 2, **caractérisé en ce que** les éléments de support (3) sont conçus en tant qu'entretoises.

4. Dispositif (1, 1') selon une ou plusieurs des revendications 1 à 3, **caractérisé en ce que** l'anneau (2) est fabriqué en graphite ou en carbone renforcé de fibres de carbone (CFRC).

5. Dispositif (1, 1') selon une ou plusieurs des revendications 1 à 4, **caractérisé en ce qu'**une surface des éléments de support (3) est équipée de particules d'un matériau céramique, et les particules ont un diamètre équivalent dans la plage de 5 à 1000nm.

6. Procédé de traitement thermochimique d'une, de deux ou plusieurs pièces métalliques (10), **caractérisé en ce qu'**un dispositif (1, 1') selon une ou plusieurs des revendications 1 à 5 est disposé sur un premier et/ou un second côté de chaque pièce (10), les pièces (10) présentent une section transversale avec un cercle enveloppant de diamètre $D_k$, le dispositif (1, 1') comprend un anneau (2) et l'anneau (2) présente une section transversale avec un cercle enveloppant de diamètre $D_a$, tel que $0,5\ D_k \leq D_a \leq 1,2\ D_k$, dans lequel le cercle enveloppant correspond au cercle circonscrit minimal d'une section transversale de l'anneau (2) ou d'une section transversale d'une pièce (10), dans lequel le cercle enveloppant est déterminé selon les normes DIN EN ISO 12180-1:2011-07 et DIN EN ISO 12181-2:2011-07 à l'aide d'une installation d'inspection d'engrenages ou d'un système de mesure de coordonnées.

7. Procédé selon la revendication 6, **caractérisé en ce qu'**une, deux ou plusieurs pièces (10) sont carburées ensemble dans une chambre de four, et une pièce (10) est disposée dans une direction verticale entre une paroi supérieure et une paroi inférieure de la chambre de chauffage.

8. Procédé selon la revendication 6 ou 7, **caractérisé en ce qu'**une, deux ou plusieurs pièces (10) sont carbonitrurées ensemble dans une chambre de four, et une pièce (10) est disposée dans une direction verticale entre une paroi supérieure et une paroi inférieure de la chambre de chauffage.

9. Procédé selon l'une quelconque des revendications 6 à 8, **caractérisé en ce qu'**une, deux ou plusieurs pièces (10) sont trempées ensemble dans une chambre de trempe, et une pièce (10) est disposée dans une direction verticale entre une paroi supérieure et une paroi inférieure de la chambre de trempe.

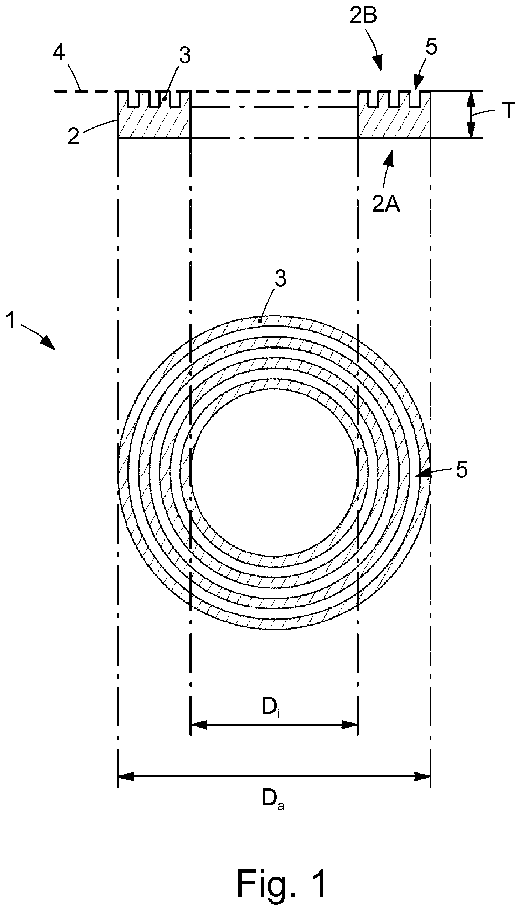

Fig. 1

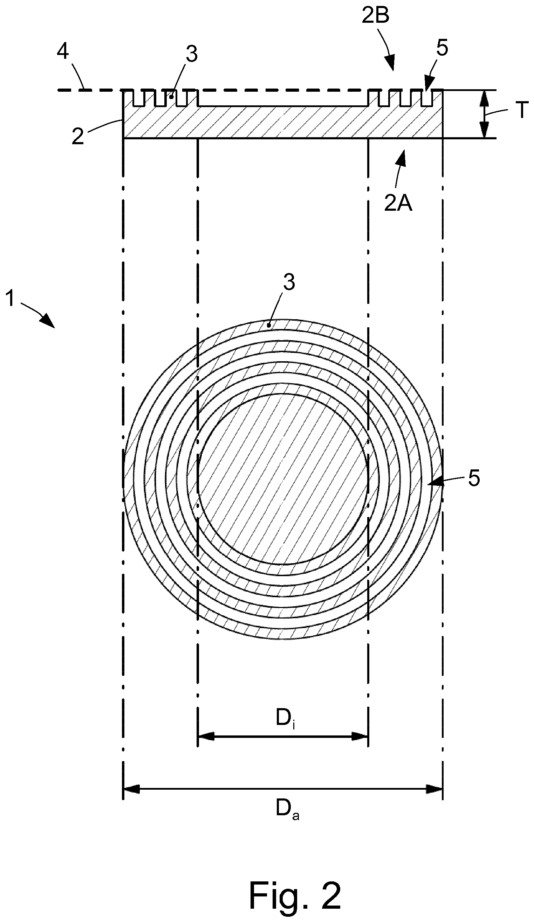

Fig. 2

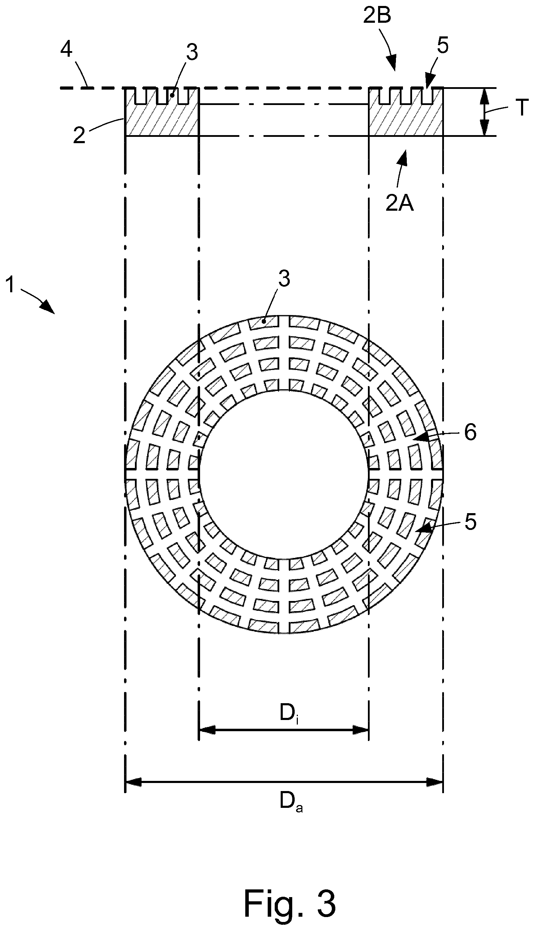

Fig. 3

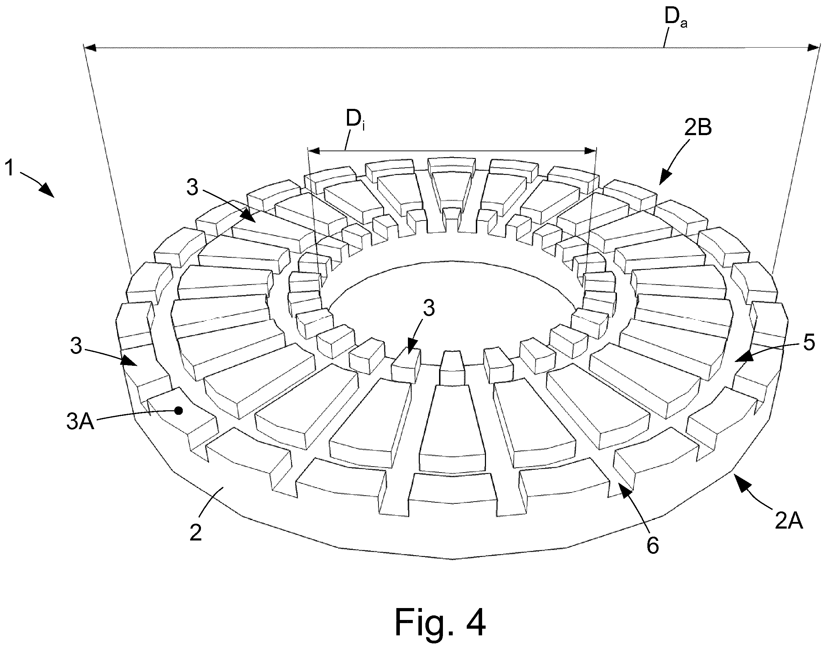

Fig. 4

EP 3 746 578 B1

Fig. 5

Fig. 6

3    3A

3    3A

# Fig. 7

Fig. 8

Fig. 9

EP 3 746 578 B1

Fig. 10

Fig. 11

**EP 3 746 578 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3144622 A1
- EP 3379189 A1
- WO 2016009849 A1
- DE 10312802 B3
- CN 20158117 U